# EUROPÄISCHE PATENTANMELDUNG

(11) **EP 4 610 457 A1**
(43) Veröffentlichungstag der Anmeldung: **03.09.2025**
(21) Anmeldenummer: 25157073.5
(22) Anmeldetag: 11.02.2025
(51) Int. Cl.: E05B 3/06, E05C 9/12, E05B 9/08, F16B 13/02

(54) **RAHMENELEMENTANORDNUNG FÜR EINE GEBÄUDEVERSCHLUSSEINRICHTUNG, ENTSPRECHENDE GEBÄUDEVERSCHLUSSEINRICHTUNG FÜR EIN GEBÄUDE SOWIE VERFAHREN ZUM HERSTELLEN EINER RAHMENELEMENTANORDNUNG**

(30) Priorität: 01.03.2024 DE 102024105949
(71) Anmelder: Roto Frank Fenster- und Türtechnologie GmbH, 70771 Leinfelden-Echterdingen (DE)
(72) Erfinder: Schäfer, Florian, 72810 Gomaringen (DE)
(74) Vertreter: Gleiss Große Schrell und Partner mbB

(57) **Zusammenfassung**

Die Erfindung betrifft eine Rahmenelementanordnung (1) für eine Gebäudeverschlusseinrichtung, mit einem Rahmenelement (2), einer an dem Rahmenelement (2) beweglich gelagerten Treibstange (4) und einem über ein in einem Innenraum (10) des Rahmenelement (2) angeordnetes Getriebe (5) antriebstechnisch an die Treibstange (4) angebundenen Bedienelement (6), wobei das Bedienelement (6) in einem an dem Rahmenelement (2) angeordneten Lagerblock (13) gelagert ist. Dabei ist vorgesehen, dass der Lagerblock (13) mittels eines Befestigungselements (14) unter Verwendung eines vollständig in das Rahmenelement (2) eingesetzten Einsetzteils (17) an dem Rahmenelement (2) befestigt ist. Die Erfindung betrifft weiterhin eine Gebäudeverschlusseinrichtung für ein Gebäude sowie ein Verfahren zum Herstellen einer Rahmenelementanordnung (1) für eine Gebäudeverschlusseinrichtung.

## Beschreibung

Die Erfindung betrifft eine Rahmenelementanordnung für eine Gebäudeverschlusseinrichtung, mit einem Rahmenelement, einer an dem Rahmenelement beweglich gelagerten Treibstange und einem über ein in einem Innenraum des Rahmenelements angeordnetes Getriebe antriebstechnisch an die Treibstange angebundenen Bedienelement, wobei das Bedienelement in einem an dem Rahmenelement angeordneten Lagerblock gelagert ist. Die Erfindung betrifft weiterhin eine Gebäudeverschlusseinrichtung für ein Gebäude sowie ein Verfahren zum Herstellen einer Rahmenelementanordnung für eine Gebäudeverschlusseinrichtung.

Aus dem Stand der Technik ist beispielsweise die Druckschrift DE 81 19 523 U1 bekannt. Diese beschreibt einen Tür- oder Fensterbeschlag in Form einer Rosette mit mindestens zwei Bohrungen zur Aufnahme von Befestigungsschrauben und in deren Verlängerung über die Anschlagfläche hinaus vorstehenden Spreizdübeln. Dabei ist vorgesehen, dass die Spreizdübel von der Anschlagfläche her in die Rosette kraftschlüssig, aber herausnehmbar eingesetzt sind, und an ihren in die Rosette eingesetzten Enden Ansätze aufweisen, die in deckungsgleiche Ausnehmungen der Rosette einsetzbar und verdrehsicher gehalten sind.

Weiterhin offenbart die Druckschrift DE 23 43 933 A1 einen Distanzhalter zwischen dem Getriebegehäuse eines Einsteck-Kanten-Getriebes für die Flügel von Fenstern, Türen oder dergleichen und einer damit über Ankerschrauben verbindbaren Lagerrosette eines mit einem Profildorn in die Nuss des in Getriebegehäuse lagernden Antriebsglied eingreifenden Bedienungshebels, wobei das Getriebegehäuse von einer falzseitig offenen Ausnehmung des Flügelprofils aufgenommen ist, die Lagerrosette auf der raumseitigen Stirnfläche des Flügelprofils sitzt und die Ankerschrauben durch von der raumseitigen Stirnfläche ausgehende, rechtwinklig dazu gerichtete Löcher in Gewindebohrungen des in der Ausnehmung liegenden Getriebegehäuses übergreifen. Dabei ist vorgesehen, dass die Löcher im Flügelprofil in an sich bekannter Weise von koaxial zu den Ankerschrauben liegenden Hülsen durchsetzt sind und dass dabei diese Hülsen Stellglieder aufweisen, über die sie in ihrer wirksamen Länge auf verschiedene Abstände zwischen der Lagerrosette und dem Getriebegehäuse einstellbar sind.

Weitere Abstandshalter für Türen oder Fenster sind den Druckschriften DE 30 34 167 A1, DE 42 25 971 C2 und DE 70 24 449 U zu entnehmen.

Es ist Aufgabe der Erfindung, eine Rahmenelementanordnung für eine Gebäudeverschlusseinrichtung vorzuschlagen, welche gegenüber bekannten Rahmenelementanordnungen Vorteile aufweist, insbesondere eine einfache und zuverlässige Montage des Bedienelements mit einem herkömmlichen Lagerblock an dem Rahmenelement ermöglicht.

Dies wird erfindungsgemäß mit einer Rahmenelementanordnung für eine Gebäudeverschlusseinrichtung mit den Merkmalen des Anspruchs 1 erreicht. Dabei ist vorgesehen, dass der Lagerblock mittels eines Befestigungselements unter Verwendung eines vollständig in das Rahmenelement eingesetzten Einsetzteils an dem Rahmenelement befestigt ist, insbesondere unter Umgehung des Getriebes, insbesondere unter Umgehung eines Getriebegehäuses des Getriebes, und/oder auf einer dem Bedienelement zugewandten Seite des Getriebes.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Die Rahmenelementanordnung ist bevorzugt Bestandteil der Gebäudeverschlusseinrichtung, kann jedoch selbstverständlich auch separat von dieser vorliegen, insbesondere bis zu einer Montage der Rahmenelementanordnung an beziehungsweise in der Gebäudeverschlusseinrichtung. Die Gebäudeverschlusseinrichtung wiederum kann Bestandteil des Gebäudes sein, jedoch auch separat von diesem vorliegen, insbesondere bis zu ihrer Montage an oder in dem Gebäude. Das Gebäude weist eine Gebäudehülle auf, zur Anordnung an beziehungsweise in welcher die Gebäudeverschlusseinrichtung vorgesehen und ausgestaltet ist. Die Gebäudehülle liegt zwischen einer Außenumgebung des Gebäudes und einem Innenraum des Gebäudes vor, separiert diese also voneinander. Die Gebäudehülle ist vorzugsweise als Wand des Gebäudes oder als Dach des Gebäudes ausgestaltet. Die Gebäudeverschlusseinrichtung dient dem zumindest zeitweisen Verschließen des Gebäudes, insbesondere dem zumindest zeitweisen Verschließen einer in der Gebäudehülle ausgebildeten Gebäudehüllenausnehmung. Die Gebäudehüllenausnehmung, welche mithilfe der Gebäudeverschlusseinrichtung zumindest zeitweise verschlossen ist, liegt insoweit entweder als Wandöffnung oder als Dachöffnung vor.

Die Gebäudeverschlusseinrichtung ist bevorzugt als Tür oder als Fenster ausgestaltet. Das Fenster kann hierbei als Fassadenfenster oder als Dachfenster beziehungsweise Dachflächenfenster, insbesondere als Wohndachfenster beziehungsweise Wohndachflächenfenster oder Oberlicht, ausgestaltet sein. Die Gebäudeverschlusseinrichtung kann zum lichtdurchlässigen oder lichtundurchlässigen Verschließen der Gebäudehüllenausnehmung ausgestaltet sein. Ist die Gebäudeverschlusseinrichtung lichtdurchlässig, so verfügt sie insbesondere über eine Verglasung, welche beispielsweise als Einfachverglasung oder als Mehrfachverglasung, insbesondere als Doppelverglasung oder als Dreifachverglasung, vorliegt.

Die Gebäudeverschlusseinrichtung verfügt über die Rahmenelementanordnung, welche wiederum das Rahmenelement aufweist. Das Rahmenelement setzt sich bevorzugt aus mehreren Rahmenholmen zusammen. Die Rahmenholme sind aneinander befestigt, nämlich derart, dass sie einen Bereich der Gebäudeverschlusseinrichtung zwischen sich aufnehmen. Die Rahmenholme bilden insoweit einen geschlossenen Rahmen beziehungsweise ein geschlossenes Rahmenelement. Das Rahmenelement beziehungsweise die mehreren Rahmenholme sind insbesondere derart ausgestaltet, dass sie die Gebäudehüllenausnehmung übergreifen und/oder abdecken. Vorzugsweise sind die Rahmenholme derart angeordnet und ausgestaltet, dass sie, insbesondere gemeinsam mit der Verglasung, die Gebäudehüllenausnehmung zumindest zeitweise vollständig verschließen. Hierzu wird die Verglasung bevorzugt von dem Rahmenelement oder einem weiteren Rahmenelement der Gebäudeverschlusseinrichtung getragen. Insbesondere ist sie hierbei von den mehreren Rahmenholmen des jeweiligen Rahmenelements eingefasst.

Die Gebäudeverschlusseinrichtung weist zusätzlich zu dem Rahmenelement ein weiteres Rahmenelement auf. Insoweit liegen mehrere Rahmenelemente vor, von welchen jedes bevorzugt über mehrere Rahmenholme verfügt. Für das Rahmenelement wurde dies bereits erläutert. Das weitere Rahmenelement ist bevorzugt analog zu dem Rahmenelement ausgestaltet, sodass auf die entsprechenden Ausführungen verwiesen wird. Die bereits erwähnte Verglasung wird besonders einem der beiden Rahmenelemente getragen und hierbei beispielsweise von den mehreren Rahmenholmen dieses Rahmenelements eingefasst.

Die Gebäudeverschlusseinrichtung ist öffenbar und schließbar, kann also geöffnet und geschlossen werden und ist entsprechend ausgestaltet. Folglich kann die Gebäudeverschlusseinrichtung in unterschiedlichen Öffnungszuständen vorliegen, in welchen die beiden Rahmenelemente der Gebäudeverschlusseinrichtung unterschiedlich zueinander angeordnet sind. Beispielsweise ist die Gebäudeverschlusseinrichtung in einem ersten Öffnungszustand geschlossen und in einem zweiten Öffnungszustand zumindest teilweise oder sogar vollständig geöffnet. Der erste Öffnungszustand kann auch als Geschlossenzustand und der zweite Öffnungszustand als Offenzustand bezeichnet werden. In dem Geschlossenzustand der Gebäudeverschlusseinrichtung wird eine von einem ersten der Rahmenelemente begrenzte Öffnung von einem zweiten der Rahmenelemente weiter verschlossen als in dem Offenzustand, insbesondere ist die Öffnung des ersten Rahmenelements in dem Geschlossenzustand vollständig von dem zweiten Rahmenelement verschlossen, bevorzugt zusammen mit der Verglasung. Beispielsweise liegt das Rahmenelement als das zweite Rahmenelement vor.

Das zweite Rahmenelement ist bezüglich des ersten Rahmenelements verlagerbar, insbesondere verschwenkbar beziehungsweise drehbar. Liegt die Verglasung vor, so ist sie bevorzugt an dem zweiten Rahmenelement angeordnet beziehungsweise befestigt und wird lediglich mittelbar über das zweite Rahmenelement abgestützt, insbesondere von dem ersten Rahmenelement und/oder der Gebäudehülle. Entsprechend ist die Verglasung gemeinsam mit dem zweiten Rahmenelement bezüglich des ersten Rahmenelements verlagerbar, insbesondere verschwenkbar beziehungsweise drehbar. Hierzu ist das zweite Rahmenelement um die Schwenkachse bezüglich des ersten Rahmenelements schwenkbar gelagert, nämlich mittels eines Schwenklagers. Beispielsweise ist das zweite Rahmenelement über das Schwenklager an das erste Rahmenelement angebunden. Alternativ oder zusätzlich ist es über das Schwenklager an die Gebäudehülle angebunden. Das erste Rahmenelement kann allgemein auch als Blendrahmen und das zweite Rahmenelement als Flügelrahmen bezeichnet werden.

Die Rahmenelementanordnung verfügt zusätzlich zu dem Rahmenelement über die Treibstange und das Getriebe, welche Bestandteil eines Beschlags der Rahmenelementanordnung beziehungsweise der Gebäudeverschlusseinrichtung sind. Die Beschlaganordnung dient insbesondere einer Bedienung des Fensters, beispielsweise einer Verriegelung beziehungsweise Entwicklung des Fensters. Der Beschlag dient vor allem zum wahlweisen Festsetzen der Rahmenelemente zueinander, insbesondere in der Geschlossenstellung. Hierzu verfügt er vorzugsweise über wenigstens einen Schließzapfen sowie über wenigstens ein Schließblech. Der Schließzapfen ist an dem Rahmenelement verlagerbar gelagert, insbesondere linear verlagerbar gelagert, und ist in einer Verriegelungsstellung sowie in einer Entriegelungsstellung anordenbar.

Das Schließblech ist hingegen an dem jeweils anderen Rahmenelement ortsfest angeordnet. In der Verriegelungsstellung wirkt der Schließzapfen mit dem Schließblech zusammen, um die beiden Rahmenelemente in der Geschlossenstellung festzusetzen. In der Entriegelungsstellung liegt der Schließzapfen hingegen außer Eingriff mit dem Schließblech vor, sodass der Beschlag eine Verlagerung der beiden Rahmenelemente zueinander aus der Geschlossenstellung heraus in Richtung der Offenstellung zulässt. In der Verriegelungsstellung ist insoweit die Gebäudeverschlusseinrichtung verriegelt, wohingegen sie in der Entriegelungsstellung entriegelt ist.

Der Schließzapfen ist beispielsweise unmittelbar an der Treibstange angeordnet, wird also gemeinsam mit dieser verlagert. Er kann jedoch selbstverständlich auch lediglich antriebstechnisch an die Treibstange angebunden sein, beispielsweise indem er fest mit einer weiteren Treibstange verbunden ist, welche wiederum antriebstechnisch an die Treibstange angeschlossen ist, beispielsweise über eine Eckumlenkung insbesondere ist über die Treibstange eine antriebstechnische Verbindung zwischen dem Schließzapfen und dem Getriebe der Rahmenelementanordnung hergestellt. Über das Getriebe wiederum ist das Bedienelement der Rahmenelementanordnung mit der Treibstange gekoppelt. Beispielsweise ist das Getriebe derart ausgestaltet, dass es eine Drehbewegung des Bedienelements in eine lineare Bewegung der Treibstange umsetzt. Das Bedienelement liegt beispielsweise als Bediengriff oder dergleichen vor, insbesondere als Drehgriff.

Das Bedienelement ist in dem Lagerblock gelagert, insbesondere drehbar. Der Lagerblock kann auch als Rosette beziehungsweise Griffrosette bezeichnet werden. Zur Montage des Bedienelements wird der Lagerblock an dem Rahmenelement angeordnet und dort befestigt. Eine antriebstechnische Verbindung zwischen dem Bedienelement und dem Getriebe ist üblicherweise über eine Welle, insbesondere eine profilierte Welle, beispielsweise eine Vierkantwelle, hergestellt, die einerseits in das Bedienelement und andererseits in das Getriebe formschlüssig eingreift, sodass die Drehbewegung des Bedienelements auf das Getriebe übertragen wird. Üblich ist es bislang, den Lagerblock ebenfalls an dem Getriebe zu befestigen, beispielsweise indem der Lagerblock mittels eines Bolzens an dem Getriebe festgesetzt wird. Ein Kopf des Bolzens liegt hierbei auf der dem Getriebe abgewandten Seite des Lagerblocks an diesem an, wohingegen ein Gewinde des Bolzens in ein Gegengewinde des Getriebes eingreift.

Das Getriebe ist üblicherweise lediglich auf seiner der Treibstange zugewandten Seite befestigt, insbesondere an dem Rahmenelement. Das bedeutet jedoch, dass es an einer Angriffsstelle, an welcher der Bolzen an ihm angreift, in Richtung der Längsmittelachse des Bolzens nicht abgestützt ist. Entsprechend kommt es bei einem Anziehen des Bolzens zu einer Verlagerung des Getriebes in Richtung des Lagerblocks. Wird der Bolzen zu stark angezogen, so kann das Getriebe sogar beschädigt werden. Bekannt ist es daher, zwischen dem Getriebe und dem Lagerblock eine Distanzhülse einzusetzen, welche von den Bolzen durchgriffen ist, sodass mithilfe des Bolzens der Lagerblock und das Bedienelement gegeneinander verspannt werden, wobei sich das Getriebe über die Distanzhülse an dem Lagerblock abstützt. Die Distanzhülse muss jedoch aus einem festen Material bestehen und/oder vergleichsweise große Abmessungen aufweisen, um den hierbei auftretenden Kräften standzuhalten. Entsprechend ist die Distanzhülse kostenaufwendig. Zudem ist sie aufwendig zu montieren. Alternative Befestigungskonzepte für den Lagerblock hingegen erfordern eine spezielle Ausgestaltung des Lagerblocks, sodass handelsübliche Bedienelemente nicht oder nur mit großem Aufwand montiert werden können.

Aus diesem Grund soll gemäß der Erfindung der Lagerblock unter Verwendung des Einsetzteils direkt an dem Rahmenelement befestigt werden. Insbesondere ist der Lagerblock auf eine Wand des Rahmenelements aufgesetzt und mithilfe des Befestigungselements mit dem Einsetzteil verbunden. Das Einsetzteil liegt in dem Rahmenelement vor, beispielsweise also in der Wand und/oder in dem Innenraum. Von Bedeutung ist hierbei, dass das Einsetzteil vollständig in das Rahmenelement eingesetzt ist, sodass auch ein handelsübliches Bedienelement mit herkömmlich ausgestaltetem Lagerblock unter Verwendung des Befestigungselements und des Einsetzteils an dem Rahmenelement festgesetzt werden kann. Das Befestigungselement liegt vorzugsweise in Form einer Schraube, beispielsweise einer Fensterbauschraube oder einer Standardgriffschraube, vor.

Das Befestigungselement wird zum Festsetzen des Lagerblocks an dem Rahmenelement in das Einsetzteil eingeschraubt, wodurch dieses formschlüssig in dem Rahmenelement gehalten ist. Vorzugsweise ist das Einsetzteil nach Art eines Dübels ausgestaltet, sodass es sich durch ein Zusammenwirken mit dem Befestigungselement, insbesondere durch Einschrauben des Befestigungselements, in dem Rahmenelement aufweitet und nachfolgend formschlüssig und/oder kraftschlüssig in dem Rahmenelement gehalten ist. Besonders bevorzugt ist es vorgesehen, dass das Einsetzteil in einem Vormontagezustand in radialer Richtung bezüglich einer Längsmittelachse des Einsetzteils Abmessungen aufweist, welche höchstens radialen Abmessungen einer in dem Rahmenelement hergestellten Ausnehmung entsprechen, in welche das Einsetzteil eingesetzt wird.

Durch das Zusammenwirken des Einsetzteils mit dem Befestigungselement weitet sich das Einsetzteil ausgehend von dem Vormontagezustand in Richtung eines Montagezustands in radialer Richtung bezüglich einer Längsmittelachse des Einsetzteils auf, sodass es zumindest bereichsweise Abmessungen aufweist, welche größer sind als Abmessungen der Ausnehmung. Besonders bevorzugt ist es hierbei, dass das Rahmenelement ein Hohlprofil aufweist, an welchem der Lagerblock angeordnet und in welches das Einsetzteil eingesetzt wird. Die beschriebene Ausgestaltung des Einsetzteils ermöglicht ein besonders zuverlässiges Festsetzen des Rahmenelements bezüglich eines solchen Hohlprofils.

Aufgrund der Verwendung des Einsetzteils zum Befestigen des Lagerblocks an dem Rahmenelement ist der Lagerblock nicht wie bisher üblich über das Getriebe an dem Rahmenelement befestigt, sondern vielmehr unter Umgehung des Getriebes beziehungsweise seines Getriebegehäuses. Vorzugsweise steht der Lagerblock ausschließlich über das Einsetzteil und das Rahmenelement mit dem Getriebe in Verbindung. Das Einsetzteil liegt hierbei bevorzugt zumindest teilweise oder sogar vollständig auf der dem Bedienelement zugewandten Seite des Getriebes vor. Anders ausgedrückt ist das Einsetzteil zwischen dem Lagerblock und dem Getriebe angeordnet, sodass das Lagerblock dort über das Einsetzteil an dem Rahmenelement angreift und somit zuverlässig befestigt ist.

Eine Weiterbildung der Erfindung sieht vor, dass das Einsetzteil in eine Ausnehmung des Rahmenelements eingesetzt ist, die in einer Wand des Rahmenelement hergestellt ist, an welcher sich der Lagerblock mit seiner dem Getriebe zugewandten Seite abstützt. In dem Rahmenelement, insbesondere in einem Rahmenholm des Rahmenelements, liegt die Ausnehmung vor, in die das Einsetzteil eingesetzt ist. Einerseits der Wand ist der Lagerblock und andererseits der Wand das Getriebe angeordnet, wobei der Lagerblock vorzugsweise an der Wand anliegt und das Getriebe von der Wand beabstandet ist. Die beschriebene Ausgestaltung ermöglicht ein effizientes Montieren der Rahmenelementanordnung.

Eine Weiterbildung der Erfindung sieht vor, dass das Getriebe von der Wand beabstandet angeordnet ist, insbesondere unter einem Abstand zu der Wand vorliegt, der mindestens 25 %, mindestens 50 % oder mindestens 75 % einer Wandstärke der Wand beträgt. In Richtung der Längsmittelachse des Einsetzteils stützt sich das Getriebe also nicht an der Wand ab, weder unmittelbar noch mittelbar. Entsprechend verkippt das Getriebe bei entsprechender Kraftbeaufschlagung, beispielsweise durch das bereits erwähnte Verspannen mit dem Lagerblock unter Verwendung des Bolzens. Dieses Verkippen kann unter Verwendung des Einsetzteils verhindert werden.

Eine Weiterbildung der Erfindung sieht vor, dass die Wand einstückig und materialeinheitlich ist, oder dass die Wand mehrere Schichten aus unterschiedlichen Materialien aufweist, insbesondere über eine Deckschicht aus einem ersten Material und eine Armierungsschicht aus einem zweiten Material verfügt. Die Wand begrenzt einerseits den Innenraum, in welchem das Getriebe angeordnet ist, und weist andererseits eine Auflagefläche auf, an welcher sich der Lagerblock abstützt. Die Wand erstreckt sich insoweit von der Auflagefläche einerseits bis hin zu dem das Getriebe aufnehmenden Innenraum andererseits. In einer ersten Variante ist die Wand einstückig und materialeinheitlich, beispielsweise besteht sie aus Holz oder aus Kunststoff, vorzugsweise liegt sie als Kunststoffhohlprofil vor.

In einer zweiten Variante setzt sich die Wand aus mehreren Schichten zusammen, beispielsweise aus der Deckschicht und der Armierungsschicht. Die Deckschicht besteht bevorzugt aus Kunststoff oder Holz und die Armierungsschicht aus Metall. Die Deckschicht ist beispielsweise Bestandteil des bereits erwähnten Hohlprofils, welches insbesondere als Kunststoffhohlprofil vorliegt. Die Armierungsschicht ist hingegen Bestandteil einer Armierung, welche in dem Rahmenelement beziehungsweise dem Rahmenholm angeordnet ist. Die Deckschicht und die Armierungsschicht können unmittelbar aneinander anliegen, sie können jedoch auch beabstandet voneinander angeordnet sein. Liegt die Armierungsschicht vor, so greift das Einsetzteil besonders bevorzugt in diese ein, sodass der Lagerblock über das Befestigungselement und das Einsetzteil unmittelbar an der Armierungsschicht beziehungsweise der Armierung festgesetzt ist. In jedem Fall wird eine zuverlässige Befestigung des Lagerblocks und mithin des Bedienelements an dem Rahmenelement erzielt.

Eine Weiterbildung der Erfindung sieht vor, dass das Einsetzteil in Richtung des Getriebes über die Wand übersteht, sodass es in den Innenraum des Rahmenelements hineinragt, und/oder dass das Einsetzteil von dem Getriebe beabstandet angeordnet ist. Das Einsetzteil erstreckt sich bis in den Innenraum, um ein besonders zuverlässiges Festsetzen des Befestigungselements an der Wand zu erzielen. Insbesondere ist das Einsetzteil derart ausgestaltet, dass es sich durch das Zusammenwirken mit dem Befestigungselement in dem Innenraum aufweitet und so die Wand formschlüssig hintergreift. Es kann vorgesehen sein, dass sich das Einsetzteil zumindest zeitweise, beispielsweise bis zu seinem Verformen, bis zu dem Getriebe erstreckt. Besonders bevorzugt ist das Einsetzteil jedoch durchgehend von dem Getriebe beabstandet angeordnet. Das Einsetzteil dient insoweit nur dem Befestigen des Befestigungselements in der Wand und nicht etwa einem Abstützen des Getriebes. Dennoch werden die bereits genannten Vorteile erzielt.

Eine Weiterbildung der Erfindung sieht vor, dass das Einsetzteil einen Gewindebereich und einen Kragenbereich aufweist, wobei der Gewindebereich von dem Lagerblock beabstandet angeordnet ist. Das Einsetzteil lässt sich insoweit in mehrere Bereiche unterteilen, nämlich zumindest den Gewindebereich und den Kragenbereich. Vorzugsweise schließen sich die beiden Bereiche unmittelbar aneinander an, der Kragenbereich geht insoweit unmittelbar von dem Gewindebereich aus.

Unter dem Gewindebereich ist derjenige Bereich des Einsetzteils zu verstehen, in welchen das Befestigungselement eingeschraubt wird, in welchen also ein Gewinde des Befestigungselements zum Befestigen des Lagerblocks an dem Rahmenelement eingreift. Der Kragenbereich dient hingegen dazu, den Gewindebereich von dem Lagerblock zu beabstanden, sodass das Einsetzteil hinreichend weit in der Wand angeordnet ist. Beispielsweise ist der Kragenbereich derart ausgestaltet, dass der Lagerblock bei seinem Anordnen an der Wand an dem Kragenbereich anliegt und das Einsetzteil in die in der Wand ausgebildete Ausnehmung hinein drängt. Beispielsweise greift der Lagerblock in den Kragenbereich ein und weitet ihn auf, sodass durch das Verspannen von Einsetzteil und Lagerblock gegeneinander mittels des Befestigungselements der Kragenbereich in radialer Richtung nach außen an die Wand gedrängt wird, sodass durch ein Hintergreifen der Wand durch das Einsetzteil eine gute Haltewirkung erzielt wird.

Eine Weiterbildung der Erfindung sieht vor, dass das Einsetzteil in dem Gewindebereich und in dem Kragenbereich jeweils geschlitzt ist, wobei in dem Gewindebereich vorliegende erste Schlitze in Umfangsrichtung bezüglich einer Längsmittelachse des Einsetzteils versetzt zu in dem Kragenbereich vorliegenden zweiten Schlitzen angeordnet sind. In jedem der Bereiche sind jeweils mehrere Schlitze hergestellt, es liegen also mehrere erste Schlitze und mehrere zweite Schlitze vor. Beispielsweise sind mindestens zwei, mindestens vier oder mindestens acht Schlitze hergestellt. Insbesondere sind ebenso viele erste Schlitze wie zweite Schlitze beziehungsweise umgekehrt vorhanden. Die Schlitze ermöglichen ein flexibles, insbesondere elastisches, Aufweiten des Einsetzteils in radialer Richtung bezüglich seiner Längsmittelachse. Die ersten Schlitze stellen hierbei sicher, dass das Einsetzteil von dem Befestigungselement zuverlässig aufgeweitet wird, wohingegen die zweiten Schlitze ein Aufweiten des Einsetzteils, insbesondere bewirkt durch das Eingreifen des Lagerblocks in das Einsetzteil, erleichtern.

Eine Weiterbildung der Erfindung sieht vor, dass der Lagerblock einen in die Ausnehmung hineinragenden Zentriervorsprung aufweist, der von dem Einsetzteil, insbesondere von dem Kragenbereich, beabstandet ist, an das Einsetzteil, insbesondere an den Kragenbereich, angrenzt, oder in das Einsetzteil, insbesondere in den Kragenbereich, eingreift. Der Zentriervorsprung erstreckt sich ausgehend von einem Grundkörper des Lagerblocks in die Ausnehmung hinein. Während also das Grundelement außenseitig an dem Rahmenelement beziehungsweise seiner Auflagefläche anliegt und durchgehend und vollständig außerhalb der Ausnehmung angeordnet ist, ragt der Zentriervorsprung in die Ausnehmung hinein. Dies dient einem zuverlässigen Ausrichten des Lagerblocks bezüglich des Rahmenelement.. Bevorzugt weist der Zentriervorsprung in radialer Richtung Außenabmessungen auf, welche Innenabmessungen der Ausnehmung entsprechen, sodass also der Zentriervorsprung in Umfangsrichtung durchgehend an einem die Ausnehmung begrenzenden Rand anliegt.

Eine solche Ausgestaltung dient auch dazu, das Einsetzteil mittels des Zentriervorsprungs in die Ausnehmung hinein zu drängen, nämlich bis eine dem Lagerblock zugewandte Seite des Einsetzteils hinreichend Platz hat, um sich in radialer Richtung aufzuweiten. Besonders bevorzugt weist der Zentriervorsprung eine Länge auf, welche größer ist als eine Schichtdicke einer an dem Lagerblock anliegenden Schicht der Wand. Beispielsweise ragt der Zentriervorsprung bis in einen Hohlraum des Hohlprofils. Dabei greift der Zentriervorsprung bevorzugt in das Einsetzteil, nämlich insbesondere in seinen Kragenbereich, ein, sobald das Einsetzteil seine Montagestellung erreicht hat. Es kann jedoch selbstverständlich auch vorgesehen sein, dass der Zentriervorsprung derart ausgestaltet ist, dass er beabstandet von dem Einsetzteil angeordnet ist oder lediglich an dieses angrenzt. In jedem Fall werden die bereits genannten Vorteile erzielt.

Eine Weiterbildung der Erfindung sieht vor, dass das Einsetzteil einstückig und materialeinheitlich ausgestaltet ist, oder dass das Einsetzteil einen Grundkörper aus einem ersten Material und einen in seinem Gewindebereich vorliegenden Gewindeeinsatz aus einem von dem ersten Material verschiedenen zweiten Material aufweist. Im Falle der einstückigen und materialeinheitlichen Ausgestaltung des Einsetzteils liegt dieses beispielsweise als Spritzgießteil vor. Bevorzugt wird es ohne Gewinde hergestellt, sodass das Befestigungselement bei seinem Einschrauben in das Einsetzteil ein Gewinde schneidet. Das Befestigungselement liegt in diesem Fall bevorzugt als selbstschneidende Schraube vor. Alternativ kann es vorgesehen sein, dass sich das Einsetzteil aus dem Grundkörper und dem Gewindeeinsatz zusammensetzt, wobei der Gewindeeinsatz in dem Grundkörper aufgenommen ist. In dem Gewindeeinsatz ist ein Gewinde hergestellt, in welches das Befestigungselement einschraubbar ist. Bevorzugt besteht der Grundkörper aus Kunststoff und der Gewindeeinsatz aus Metall, um ein besonders zuverlässiges Festsetzen des Lagerblock an dem Rahmenelement zu gewährleisten.

Eine Weiterbildung der Erfindung sieht vor, dass das Befestigungselement ein erstes Befestigungselement mehrerer Befestigungselemente ist, mittels welchen der Lagerblock an dem Rahmenelement befestigt ist, und wenigstens ein zweites der Befestigungselemente unmittelbar an dem Rahmenelement angreift. Die mehreren Befestigungselement sind also unterschiedlich ausgestaltet beziehungsweise greifen auf unterschiedliche Art und Weise an dem Rahmenelement an. Während das erste Befestigungselement oder mehrere erste Befestigungselemente jeweils über ein Befestigungselement an dem Rahmenelement angreifen, um den Lagerblock an dem Rahmenelement zu befestigen, greifen das zweite Befestigungselement beziehungsweise die zweiten Befestigungselemente unmittelbar an dem Rahmenelement an, also nicht über ein Einsetzteil. Eine solche Ausgestaltung findet insbesondere für eine Reparatur einer bestehenden Rahmenelementanordnung Anwendung.

Beispielsweise ist der Lagerblock zunächst allein mittels zweiter Befestigungselemente an dem Rahmenelement befestigt, also ohne Verwendung von Einsetzteilen. Es kann jedoch vorkommen, dass nach einem Lösen eines der Befestigungselemente dieses nicht mehr derart in das Rahmenelement eingeschraubt werden kann, dass es den Lagerblock hält, beispielsweise aufgrund einer Aufweitung oder einem Ausreißen der Ausnehmung, in welchem das jeweilige Befestigungselement angeordnet war. In diesem Fall ist es vorzugsweise vorgesehen, die Ausnehmung aufzubohren, also mit einem größeren Durchmesser zu versehen. In die Ausnehmung wird nachfolgend das Einsetzteil eingesetzt und das Befestigungselement in dieses eingeschraubt. Entsprechend kann auch bei einer Beschädigung oder einer altersbedingten Abnutzung des Rahmenelements stets ein zuverlässiges Befestigen des Lagerblocks gewährleistet werden.

Eine Weiterbildung der Erfindung sieht vor, dass die Ausnehmung als erste Ausnehmung mehrerer Ausnehmungen vorliegt und eine zweite der Ausnehmungen, in welche das zweite Befestigungselement eingreift, kleinere Abmessungen aufweist als die erste Ausnehmung. Die erste Ausnehmung dient der Aufnahme des ersten Befestigungselements und die zweite Ausnehmung der Aufnahme des zweiten Befestigungselement. Da letzteres ohne das Einsetzteil auskommt, ist die zweite Ausnehmung mit kleineren Abmessungen in radialer Richtung hergestellt als die erste Ausnehmung. Hierdurch werden die bereits genannten Vorteile erzielt.

Eine Weiterbildung der Erfindung sieht vor, dass das Getriebe eine Befestigungsausnehmung aufweist und die Ausnehmung mit der Befestigungsausnehmung fluchtet. Die Befestigungsausnehmung des Getriebes beziehungsweise des Getriebegehäuses dient einer Befestigung des Lagerblocks an dem Rahmenelement auf herkömmliche Art und Weise, also durch Einschrauben des einerseits an dem Lagerblock angreifenden Befestigungselement in das Getriebegehäuse beziehungsweise die Befestigungsausnehmung. Hierzu liegt in der Befestigungsausnehmung vorzugsweise ein Gewinde vor. Diese Art der Befestigung kann für manche Rahmenelementanordnungen geeignet sein, beispielsweise aufgrund eines unmittelbaren Anliegen des Getriebes an der Wand. Ist eine solche Befestigung hingegen nicht möglich, beispielsweise aufgrund einer beabstandeten Anordnung des Getriebes von der Wand, wird das Einsetzteil in die Ausnehmung eingesetzt. Da die Ausnehmung mit der Befestigungsausnehmung fluchtet, kann flexibel die jeweils passende Befestigungsmethode ausgewählt werden. Zudem ermöglicht es die Verwendung eines Standardgetriebes, das Getriebe muss also nicht auf die Befestigung des Lagerblocks unter Verwendung des Einsetzteils angepasst sein.

Eine Weiterbildung der Erfindung sieht vor, dass das Befestigungselement in die Befestigungsausnehmung lose hineinragt. Bei einer solchen Ausgestaltung steht das Befestigungselement über das Einsetzteil über, nämlich auf seiner dem Getriebe zugewandten Seite beziehungsweise seiner dem Lagerblock abgewandten Seite. Die Länge des Befestigungselements ist hierbei derart gewählt, dass es in die Befestigungsausnehmung hineinragt. Dies erfolgt jedoch derart, dass das Befestigungselement vorzugsweise beabstandet von einem Rand der Befestigungsausnehmung vorliegt, sodass es also nicht an dem Getriebe beziehungsweise seinem Getriebegehäuse anliegt. Eine solche Ausgestaltung ermöglicht die Verwendung des Befestigungselements in nahezu beliebiger Länge.

Die Erfindung betrifft weiterhin eine Gebäudeverschlusseinrichtung für ein Gebäude, mit einer Rahmenelementanordnung, insbesondere einer Rahmenelementanordnung gemäß den Ausführungen im Rahmen dieser Beschreibung, die über ein Rahmenelement, eine an dem Rahmenelement beweglich gelagerte Treibstange und ein über ein in einem Innenraum des Rahmenelements angeordnetes Getriebe antriebstechnisch an die Treibstange angebundenes Bedienelement verfügt, wobei das Bedienelement in einem an dem Rahmenelement angeordneten Lagerblock gelagert ist. Dabei ist vorgesehen, dass der Lagerblock mittels eines Befestigungselements unter Verwendung eines vollständig in das Rahmenelement eingesetzten Einsetzteils an dem Rahmenelement befestigt ist, insbesondere unter Umgehung des Getriebes, insbesondere unter Umgehung eines Getriebegehäuses des Getriebes, und/oder auf einer dem Bedienelement zugewandten Seite des Getriebes.

Auf die Vorteile einer derartigen Ausgestaltung der Gebäudeverschlusseinrichtung beziehungsweise der Rahmenelementanordnung wurde bereits hingewiesen. Sowohl die Gebäudeverschlusseinrichtung als auch die Rahmenelementanordnung können gemäß den Ausführungen im Rahmen dieser Beschreibung weitergebildet sein, sodass insoweit auf diese verwiesen wird.

Die Erfindung betrifft zu guter Letzt auch ein Verfahren zum Herstellen einer Rahmenelementanordnung für eine Gebäudeverschlusseinrichtung, insbesondere einer Rahmenelementanordnung gemäß den Erläuterungen in dieser Beschreibung, wobei die Rahmenelementanordnung über ein Rahmenelement, eine an dem Rahmenelement beweglich gelagerte Treibstange und ein über ein in einem Innenraum des Rahmenelements angeordnetes Getriebe antriebstechnisch an die Treibstange angebundenes Bedienelement verfügt, wobei das Bedienelement in einem an dem Rahmenelement angeordneten Lagerblock gelagert ist. Dabei ist vorgesehen, dass der Lagerblock mittels eines Befestigungselements unter Verwendung eines vollständig in das Rahmenelement eingesetzten Einsetzteils an dem Rahmenelement befestigt wird, insbesondere unter Umgehung des Getriebes, insbesondere unter Umgehung eines Getriebegehäuses des Getriebes, und/oder auf einer dem Bedienelement zugewandten Seite des Getriebes.

Erneut wird hinsichtlich der Vorteile und möglicher vorteilhafter Weiterbildungen auf die Ausführungen in dieser Beschreibung verwiesen.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung einer Rahmenelementanordnung für eine Gebäudeverschlusseinrichtung,
- Figur 2: eine weitere schematische Schnittdarstellung der Rahmenelementanordnung,
- Figur 3: eine schematische Schnittdarstellung der Rahmenelementanordnung in einer alternativen Ausgestaltung,
- Figur 4: eine schematische Darstellung eines Einsetzteils der Rahmenelementanordnung in einer ersten Ansicht, sowie
- Figur 5: eine schematische Darstellung des Einsetzteils in einer zweiten Ansicht.

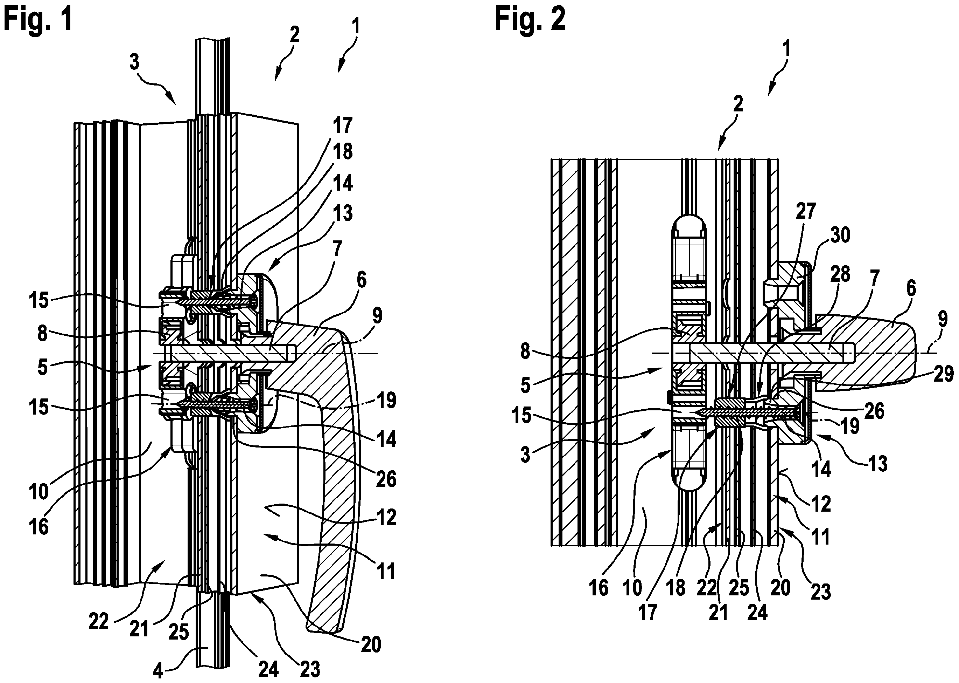

Die Figur 1 zeigt eine schematische Darstellung einer Rahmenelementanordnung 1, wie sie beispielsweise als Bestandteil einer Gebäudeverschlusseinrichtung, insbesondere eines Fensters, einer Tür oder dergleichen, vorliegt. Die Rahmenelementanordnung 1 verfügt über ein Rahmenelement 2, das in dem vorliegenden Ausführungsbeispiel als Flügelrahmen der Gebäudeverschlusseinrichtung ausgestaltet ist. Zusätzlich zu dem Rahmenelement 2 weist die Rahmenelementanordnung 1 einen Beschlag 3 auf, der zumindest eine an dem Rahmenelement 2 beweglich gelagerte Treibstange 4 und ein Getriebe 5 aufweist, über welches ein Bedienelement 6 antriebstechnisch an die Treibstange 4 angebunden ist. In dem gezeigten Ausführungsbeispiel ist das Bedienelement 6 über eine Welle 7 antriebstechnisch an das Getriebe 5 angebunden, insbesondere an ein Zahnrad 8 des Getriebes, dessen Verzahnung mit einer Gegenverzahnung in Eingriff steht, die Bestandteil der Treibstange 4 ist oder zumindest mit der Treibstange 4 antriebstechnisch gekoppelt ist. Das Getriebe 5 ist bevorzugt derart ausgestaltet, dass eine Drehbewegung des Bedienelements 6 um eine Drehachse 9 in eine lineare Bewegung der Treibstange 4 umgesetzt wird. An der Treibstange 4 liegt beispielsweise ein Schließzapfen vor oder ein solcher Schließzapfen ist zumindest an die Treibstange 4 angebunden, beispielsweise über eine weitere Treibstange.

Das Getriebe 5 ist in einem Innenraum 10 des Rahmenelement 2 angeordnet, welcher in Richtung des Bedienelements 6 von einer Wand 11 begrenzt ist. Auf ihrer dem Bedienelement 6 zugewandten Seite bildet die Wand 11 eine Auflagefläche 12 für einen Lagerblock 13, welcher auch als Rosette beziehungsweise Griffrosette bezeichnet wird. Der Lagerblock 13 dient zur Lagerung des Bedienelements 6, insbesondere zur Drehlagerung um die Drehachse 9. Üblicherweise ist der Lagerblock 13 mittels einem oder mehreren Befestigungselementen 14, welche hier als Schrauben vorliegen, unmittelbar an dem Getriebe 5 befestigt. Dieses verfügt hierzu über Befestigungsausnehmungen 15, die in einem Getriebegehäuse 16 des Getriebes 5 hergestellt sind. Es ist jedoch erkennbar, dass das Getriebe 5 beziehungsweise ein Getriebegehäuse 16 in axialer Richtung bezüglich der Drehachse 9 von der Wand 11 beabstandet in dem Innenraum 10 angeordnet ist.

Bei einer herkömmlichen Befestigung des Lagerblocks 13 mittels der Befestigungselemente 14 an dem Getriebe 5 würde dieses mit einem Kippmoment beaufschlagt, welches das Getriebe unter Verformung des Rahmenelements 2 in Richtung des Bedienelements 6 beziehungsweise des Lagerblocks 13 drängt. Aus diesem Grund ist es vorgesehen, den Lagerblock 13 gerade nicht über das Getriebe 5 an dem Rahmenelement 2 zu befestigen, sondern vielmehr unter Umgehung des Getriebes 5 beziehungsweise seines Getriebegehäuses 16. Hierzu ist ein Einsetzteil 17 beziehungsweise sind mehrere Einsetzteile 17 in das Rahmenelement 2 beziehungsweise dessen Wand 11 eingesetzt. Nachfolgend wird lediglich auf eines der Einsetzteile 17 näher eingegangen; die Ausführungen sind jedoch auf jedes der mehreren Einsetzteile 17 übertragbar. Ohnehin versteht es sich von selbst, dass eine beliebige Anzahl an Einsetzteilen 17 vorliegen kann, selbstständig auch lediglich ein einziges.

Es ist erkennbar, dass das Befestigungselement 14 in das Einsetzteil 17 eingeschraubt ist. Als Befestigungselement 14 wird in dem dargestellten Ausführungsbeispiel eine Fensterbauschraube verwendet, welche selbstschneidend ist. Das Befestigungselement 14 weist insoweit ein Gewinde 18 auf, welches erst bei einem Einschrauben des Befestigungselements 14 in das Einsetzteil 17 dort ein Gegengewinde herstellt. Eine Längsmittelachse 19 des Einsetzteils 17 verläuft vorzugsweise durch die Befestigungsausnehmung 15. Zudem kann es, wie hier dargestellt, vorgesehen sein, dass das Befestigungselement 14 bis in die Befestigungsausnehmung 15 hineinragt, diese also zumindest teilweise durchgreift. Hierdurch ist eine besondere Flexibilität hinsichtlich einer Auswahl des Befestigungselements 14 realisiert.

Die Wand 11 ist in dem dargestellten Ausführungsbeispiel mehrschichtig aufgebaut, insbesondere weist sie eine Deckschicht 20, an welcher die Auflagefläche 12 für den Lagerblock 13 vorliegt, sowie eine Armierungsschicht 21 auf. Die Armierungsschicht 21 ist Bestandteil einer Armierung 22 des Rahmenelement 2, die einer Versteifung des Rahmenelements 2 dient. Beispielsweise ist das Getriebe 5 in der Armierung 22 angeordnet und/oder an der Armierung befestigt. Die Deckschicht 20 ist Bestandteil eines Hohlprofils 23 des Rahmenelement 2, welches zusätzlich zu der Deckschicht 20 weitere Schichten 24 und 25 aufweist, welche bevorzugt parallel zu der Deckschicht 20 verlaufen. Die Deckschicht 20, die Schicht 24 sowie die Schicht 25 sind bevorzugt beabstandet voneinander angeordnet und schließen jeweils einen luftgefüllten Hohlraum zwischen sich ein. Hierdurch wird eine gute Isolierung des Rahmenelement 2 erzielt.

Bevorzugt liegt die Armierungsschicht 21 unmittelbar an der dem Innenraum 10 zugewandten Schicht 25 des Hohlprofils 23; auch eine Beabstandung der Armierungsschicht 21 von der Schicht 25 kann jedoch vorgesehen sein. Bevorzugt sind das Befestigungselement 14 und das Einsetzteil 17 derart angeordnet und ausgestaltet, dass das Befestigungselement 14 in der Armierungsschicht 21 mit dem Einsetzteil 17 verschraubt ist. Besonders bevorzugt steht zudem das Einsetzteil 17 in Richtung des Innenraums 10 über die Wand 11 über, insbesondere über die Armierungsschicht 21. Dies ermöglicht ein Aufweiten des Einsetzteils 17 in radialer Richtung bezüglich der Längsmittelachse 19 auf der dem Lagerblock 13 abgewandten Seite der Armierungsschicht 21, sodass ein besonders zuverlässiges Befestigen des Lagerblocks 13 an dem Rahmenelement 2 gewährleistet ist. In jedem Fall ist das Einsetzteil 17 in eine Ausnehmung 26 eingesetzt, welche in der Wand 11 hergestellt ist. Beispielsweise durchgreift die Ausnehmung 26 die Wand 11 in Richtung der Längsmittelachse 19 vollständig, insbesondere mit über die gesamte Erstreckung der Ausnehmung 26 in axialer Richtung gleich bleibenden Abmessungen in radialer Richtung.

Die Figur 2 zeigt eine weitere schematische Schnittdarstellung der Rahmenelementanordnung 1. Es ist erkennbar, dass das Einsetzteil 17 einen Gewindebereich 27 sowie einen Kragenbereich 28 aufweist. In dem Gewindebereich 27 greift das Befestigungselement 14 an dem Einsetzteil 17 an, insbesondere bildet es dort das Gegengewinde des Einsetzteils 17 aus. In dem Kragenbereich 28 ist das Befestigungselement 14 hingegen in radialer Richtung von dem Einsetzteil 17 beabstandet beziehungsweise durchgreift es berührungslose bis hin zu dem Gewindebereich 27. Vorzugsweise ist es vorgesehen, dass das Einsetzteil 17 so weit in die Ausnehmung 26 eingeschoben wird, dass es hinter der Deckschicht 20 angeordnet ist. In diesem Bereich weitet sich der Kragenbereich 28 aus, beispielsweise durch ein Eingreifen eines Zentriervorsprung 29 des Lagerblocks 13 in das Einsetzteil 17. Der Zentriervorsprung 29 geht von einem Grundkörper 30 des Lagerblocks 13 aus, welcher auf der Auflagefläche 12 der Wand 11 aufliegt und vollständig außerhalb der Ausnehmung 26 angeordnet ist. Der Zentriervorsprung 29 greift hingegen in die Ausnehmung 26 ein, nämlich bis hin zu dem Einsetzteil 17. Dort greift es in den Kragenbereich 28 ein und weitet diesen in radialer Richtung nach außen auf, sodass der Kragenbereich 28 die Deckschicht 20 hintergreift. Hierdurch ist das Einsetzteil 17 zuverlässig in der Ausnehmung 26 festgesetzt.

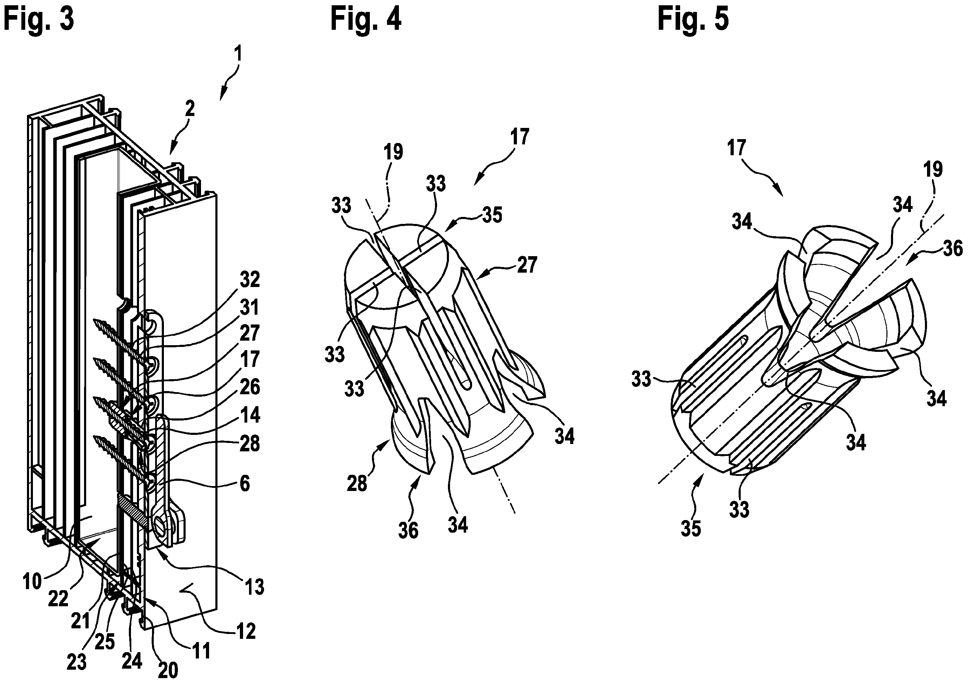

Die Figur 3 zeigt die Rahmenelementanordnung 1 in einer alternativen Ausgestaltung. Diese ähnelt grundsätzlich der vorstehend beschriebenen Ausgestaltung der Rahmenelementanordnung 1, sodass auf die entsprechenden Ausführungen vollumfänglich Bezug genommen und nachfolgend lediglich auf die Unterschiede eingegangen wird. Deutlich zu erkennen ist nochmals der mehrschichtige Aufbau der Wand 11, die sich aus den Schichten 20, 21, 24 und 25 der Armierung 22 sowie des Hohlprofils 23 zusammensetzt. Ein Unterschied zu der zuvor beschriebenen Ausgestaltung liegt in dem Bedienelement 6, welches auf ein anderes Bedienkonzept gerichtet ist. Dieses ist jedoch nicht wesentlich für die Befestigung des Lagerblocks 13 an dem Rahmenelement 2, sodass hierauf nicht weiter eingegangen wird.

Es zu erkennen, dass das Befestigungselement 14 als ein erstes Befestigungselement 14 vorliegt und zusätzlich zu dem ersten Befestigungselement 14 ein oder mehrere zweite Befestigungselemente 31 vorliegen, von welchen hier lediglich eines beispielhaft gekennzeichnet ist. Analog hierzu ist die Ausnehmung 26 als erste Ausnehmung 26 ausgestaltet und zusätzlich liegen eine oder mehrere zweite Ausnehmungen 32 vor, die in der Wand 11 hergestellt sind. Die erste Ausnehmung 26 hat größere Abmessungen in radialer Richtung als die Ausnehmung 32. Folgerichtig ist lediglich in die erste Ausnehmung 26 das Einsetzteil 17 eingesetzt und der Lagerblock 13 über das erste Befestigungselement 14 mit diesen verschraubt. Das zweite Befestigungselement 31, welches in der durchmesserkleineren Ausnehmung 32 vorliegt, ist hingegen unmittelbar, also ohne Zwischenschaltung des Einsetzteils 17, mit der Wand 11 verschraubt. Beispielsweise liegt ein solcher Zustand der Rahmenelementanordnung 1 vor einer Instandsetzung vor, bei welcher das Befestigungselement 14 gelöst wurde und nachfolgend nicht mehr mit der Wand 11 verschraubt werden kann. In diesem Fall wird die durchmessergrößeren Ausnehmung 26 hergestellt und das Einsetzteil 17 zum Befestigen des Lagerblocks 13 unter Verwendung des Befestigungselements 14 vorgenommen.

Die Figur 4 zeigt eine schematische Darstellung einer beispielhaften Ausgestaltung des Einsetzteils 17. Es zeigt sich, dass das Einsetzteil 17 einstückig und materialeinheitlich ausgestaltet ist und beispielsweise als Spritzgussteil vorliegt. Es ist sowohl in seinem Gewindebereich 27 als auch in seinem Kragenbereich 28 jeweils geschlitzt, sodass in dem Gewindebereich 27 erste Schlitze 33 und in den Kragenbereich 28 zweite Schlitze 34 vorliegen. Die ersten Schlitze 33 sowie die zweiten Schlitze 34 sind untereinander bevorzugt jeweils äquidistant zueinander angeordnet, sodass sie in Umfangsrichtung bezüglich der Längsmittelachse 19 gleichmäßig verteilt angeordnet sind. Die ersten Schlitze 33 sind jedoch in Umfangsrichtung zu den zweiten Schlitzen 34 versetzt angeordnet, insbesondere liegt - in Umfangsrichtung gesehen - jeweils einer der ersten Schlitze 33 zwischen zwei der zweiten Schlitze 34 vor und umgekehrt, insbesondere mittig.

Die ersten Schlitze 33 und die zweiten Schlitze 34 gehen von gegenüberliegenden Enden des Einsetzteils 17 aus, insbesondere durchgreifen die ersten Schlitze 33 ein erstes axiales Ende 35 des Einsetzteils 17 und die zweiten Schlitze 34 ein zweites axiales Ende 36 des Einsetzteils 17. In axialer Richtung gesehen überlappend die ersten Schlitze 33 und die zweiten Schlitze 34 einander bereichsweise, insbesondere nur bereichsweise. Das bedeutet, dass sie sich ausgehend von den gegenüberliegenden Enden 35 und 36 aufeinander zu laufen und erst in Überdeckung miteinander enden. Hierdurch ist eine hinreichende Flexibilität des Einsetzteils 17 erzielt.

Die Figur 5 zeigt eine schematische Darstellung des Einsetzteils 17 in einer zweiten Ansicht. Es wird auf die vorstehenden Ausführungen verwiesen.

### BEZUGSZEICHENLISTE

- 1: Rahmenelementanordnung
- 2: Rahmenelement
- 3: Beschlag
- 4: Treibstange
- 5: Getriebe
- 6: Bedienelement
- 7: Welle
- 8: Zahnrad
- 9: Drehachse
- 10: Innenraum
- 11: Wand
- 12: Auflagefläche
- 13: Lagerblock
- 14: Befestigungselement
- 15: Befestigungsausnehmung
- 16: Getriebegehäuse
- 17: Einsetzteil
- 18: Gewinde
- 19: Längsmittelachse
- 20: Deckschicht
- 21: Armierungsschicht
- 22: Armierung
- 23: Hohlprofil
- 24: Schicht
- 25: Schicht
- 26: Ausnehmung
- 27: Gewindebereich
- 28: Kragenbereich
- 29: Zentriervorsprung
- 30: Grundkörper
- 31: Befestigungselement
- 32: Ausnehmung
- 33: 1. Schlitz
- 34: 2. Schlitz
- 35: 1. Ende
- 36: 2. Ende

## Patentansprüche

1. Rahmenelementanordnung (1) für eine Gebäudeverschlusseinrichtung, mit einem Rahmenelement (2), einer an dem Rahmenelement (2) beweglich gelagerten Treibstange (4) und einem über ein in einem Innenraum (10) des Rahmenelement (2) angeordnetes Getriebe (5) antriebstechnisch an die Treibstange (4) angebundenen Bedienelement (6), wobei das Bedienelement (6) in einem an dem Rahmenelement (2) angeordneten Lagerblock (13) gelagert ist, **dadurch gekennzeichnet, dass** der Lagerblock (13) mittels eines Befestigungselements (14) unter Verwendung eines vollständig in das Rahmenelement (2) eingesetzten Einsetzteils (17) an dem Rahmenelement (2) befestigt ist.

2. Rahmenelementanordnung nach Anspruch 1, **dadurch gekennzeichnet, dass** das Einsetzteil (17) in eine Ausnehmung (26) des Rahmenelement (2) eingesetzt ist, die in einer Wand (11) des Rahmenelement (2) hergestellt ist, an welcher sich der Lagerblock (13) mit seiner dem Getriebe (5) zugewandten Seite abstützt.

3. Rahmenelementanordnung nach einem der vorhergehenden Ansprüche, **dadurch gekennzeichnet, dass** das Getriebe (5) von der Wand (11) beabstandet angeordnet ist.

4. Rahmenelementanordnung nach einem der vorhergehenden Ansprüche, **dadurch gekennzeichnet, dass** die Wand (11) einstückig und materialeinheitlich ist, oder dass die Wand (11) mehrere Schichten (20, 21, 24, 25) aus unterschiedlichen Materialien aufweist.

5. Rahmenelementanordnung nach einem der vorhergehenden Ansprüche, **dadurch gekennzeichnet, dass** das Einsetzteil (17) in Richtung des Getriebes (5) über die Wand (11) übersteht, sodass es in den Innenraum (10) des Rahmenelement (2) hineinragt, und/oder dass das Einsetzteil (17) von dem Getriebe (5) beabstandet angeordnet ist.

6. Rahmenelementanordnung nach einem der vorhergehenden Ansprüche, **dadurch gekennzeichnet, dass** das Einsetzteil (17) einen Gewindebereich (27) und einen Kragenbereich (28) aufweist, wobei der Gewindebereich (27) von dem Lagerblock (13) beabstandet angeordnet ist.

7. Rahmenelementanordnung nach einem der vorhergehenden Ansprüche, **dadurch gekennzeichnet, dass** das Einsetzteil (17) in dem Gewindebereich (27) und in dem Kragenbereich (28) jeweils geschlitzt ist, wobei in dem Gewindebereich (27) vorliegende erste Schlitze (33) in Umfangsrichtung bezüglich einer Längsmittelachse (19) des Einsetzteils (17) versetzt zu in dem Kragenbereich (28) vorliegenden zweiten Schlitzen (34) angeordnet sind.

8. Rahmenelementanordnung nach einem der vorhergehenden Ansprüche, **dadurch gekennzeichnet, dass** der Lagerblock (13) einen in die Ausnehmung (26) hineinragenden Zentriervorsprung (29) aufweist, der von dem Einsetzteil (17) beabstandet ist, an das Einsetzteil (17) angrenzt oder in das Einsetzteil (17) eingreift.

9. Rahmenelementanordnung nach einem der vorhergehenden Ansprüche, **dadurch gekennzeichnet, dass** das Einsetzteil (17) einstückig und materialeinheitlich ausgestaltet ist, oder dass das Einsetzteil (17) einen Grundkörper (30) aus einem ersten Material und einen in seinem Gewindebereich (27) vorliegenden Gewindeeinsatz aus einem von dem ersten Material verschiedenen zweiten Material aufweist.

10. Rahmenelementanordnung nach einem der vorhergehenden Ansprüche, **dadurch gekennzeichnet, dass** das Befestigungselement (14) ein erstes Befestigungselement (14) mehrerer Befestigungselemente (14, 31) ist, mittels welchen der Lagerblock (13) an dem Rahmenelement (2) befestigt ist, und wenigstens ein zweites der Befestigungselemente (14, 31) unmittelbar an dem Rahmenelement (2) angreift.

11. Rahmenelementanordnung nach einem der vorhergehenden Ansprüche, **dadurch gekennzeichnet, dass** die Ausnehmung (26) als erste Ausnehmung (26) mehrerer Ausnehmungen (26, 32) vorliegt und eine zweite der Ausnehmungen (26, 32), in welche das zweite Befestigungselement (31) eingreift, kleinere Abmessungen aufweist als die erste Ausnehmung (26).

12. Rahmenelementanordnung nach einem der vorhergehenden Ansprüche, **dadurch gekennzeichnet, dass** das Getriebe (5) eine Befestigungsausnehmung (15) aufweist und die Ausnehmung (26) mit der Befestigungsausnehmung (15) fluchtet.

13. Rahmenelementanordnung nach einem der vorhergehenden Ansprüche, **dadurch gekennzeichnet, dass** das Befestigungselement (14) in die Befestigungsausnehmung (15) lose hineinragt.

14. Gebäudeverschlusseinrichtung für ein Gebäude, mit einer Rahmenelementanordnung (1), insbesondere einer Rahmenelementanordnung (1) nach einem oder mehreren der vorhergehenden Ansprüche, die über ein Rahmenelement (2), eine an dem Rahmenelement (2) beweglich gelagerte Treibstange (4) und ein über ein in einem Innenraum (10) des Rahmenelement (2) angeordnetes Getriebe (5) antriebstechnisch an die Treibstange (4) angebundenes Bedienelement (6) verfügt, wobei das Bedienelement (6) in einem an dem Rahmenelement (2) angeordneten Lagerblock (13) gelagert ist, **dadurch gekennzeichnet, dass** der Lagerblock (13) mittels eines Befestigungselements (14) unter Verwendung eines vollständig in das Rahmenelement (2) eingesetzten Einsetzteils (17) an dem Rahmenelement (2) befestigt ist.

15. Verfahren zum Herstellen einer Rahmenelementanordnung (1) für eine Gebäudeverschlusseinrichtung, insbesondere einer Rahmenelementanordnung (1) nach einem oder mehreren der Ansprüche 1 bis 13, die über ein Rahmenelement (2), eine an dem Rahmenelement (2) beweglich gelagerte Treibstange (4) und ein über ein in einem Innenraum (10) des Rahmenelement (2) angeordnetes Getriebe (5) antriebstechnisch an die Treibstange (4) angebundenes Bedienelement (6) verfügt, wobei das Bedienelement (6) in einem an dem Rahmenelement (2) angeordneten Lagerblock (13) gelagert ist, **dadurch gekennzeichnet, dass** der Lagerblock (13) mittels eines Befestigungselements (14) unter Verwendung eines vollständig in das Rahmenelement (2) eingesetzten Einsetzteils (17) an dem Rahmenelement (2) befestigt wird.
